# EUROPÄISCHE PATENTSCHRIFT

(11) **EP 3 209 422 B1**
(45) Veröffentlichungstag und Bekanntmachung des Hinweises auf die Patenterteilung: **31.01.2018**
(21) Anmeldenummer: 15790823.7
(22) Anmeldetag: 21.10.2015
(51) Int. Cl.: B02C 4/08, B02C 19/00, B02C 21/00, B02C 23/14, B03B 9/06

(54) **RECYCLINGANLAGE FÜR GIPSKARTON**
RECYCLING PLANT FOR PLASTERBOARD
INSTALLATION DE RECYCLAGE POUR PLACOPLÂTRE

(30) Priorität: 22.10.2014 DE 102014115409
(43) Veröffentlichungstag der Anmeldung: 30.08.2017
(73) Patentinhaber: Neuenhauser Maschinenbau GmbH, 49828 Neuenhaus (DE)
(72) Erfinder: BROUWER, Wolfgang, 49843 Uelsen (DE); EVES, Martin, County Donegal (IE)
(74) Vertreter: Griepenstroh, Jörg
(86) Internationale Anmeldenummer: PCT/DE2015/100440
(87) Internationale Veröffentlichungsnummer: WO 2016/062306

(56) Entgegenhaltungen:
- EP-A1- 1 421 995
- EP-B1- 2 473 294
- WO-A1-2012/020607
- JP-A- 2004 243 165
- JP-A- 2012 024 690

## Beschreibung

Die vorliegende Erfindung betrifft eine Recyclinganalage für Gipskarton gemäß den Merkmalen im Patentanspruch 1.

Für verschiedene Anwendungen im Baugewerbe, insbesondere für den Innenausbau sind Gipskartonplatten aus dem Stand der Technik bekannt. Diese Gipskartonplatten sind meist derart ausgebildet, dass eine Unterseite und eine Oberseite aus einem Papier bzw. einer Kartonage bestehen und dazwischen ein Gipswerkstoff angeordnet ist. Diese Gipskartonagen sind auch als Gipskartonplatten bekannt. Es gibt sie für verschiedene Einsatzzwecke, beispielsweise in verschiedenen Größen oder aber auch für Trockenräume sowie Feuchträume. Zumeist sind die Gipskartonplatten mehrere Quadratmeter groß.

Die Gipskartonplatten werden dabei für den Innenausbau bzw. für den Trockenbau oder aber Trockenputz verwendet. Hierzu werden auf einer Lattung bzw. einer Unterkonstruktion Gipskartonplatten befestigt. Diese Befestigung wird in der Regel mittels Schrauben durchgeführt. Alternativ oder ergänzend können die Gipskartonplatten auch mit der Lattung oder untereinander verklebt sein. Die Lattung bzw. Unterkonstruktion ist entweder aus Holz, insbesondere aus Dachlatten und/oder Profilschienen ausgebildet. Die Profilschienen selbst sind insbesondere aus einem metallischen Stahlwerkstoff ausgebildet.

Bei einem Abbruch oder Rückbau werden somit die aus Gipskartonagen hergestellten Wände oder Wandverkleidung abgebrochen und weisen verschiedene Stückgrößen auf. Dieses Abbruchgut weist somit Komponenten zum einen der Gipskartonplatten, jedoch auch von Holz, Metall sowie anderweitigen Steinen oder Einbauten sowie Schrauben, Nägel mitunter auch Teile einer Sanitärinstallation oder aber Elektroinstallation auf.

Um den Gipskarton zu recyceln müssen nunmehr die verschiedenen Fremdstoffe wie Holz, Metall oder sonstige Fremdstoffe abgetrennt werden sowie der Gipskarton in die Bestandteile Gips und Karton bzw. Papier getrennt werden. Es ergibt sich dabei jedoch die Besonderheit, dass der Gips mit dem Karton, insbesondere stoffschlüssig gekoppelt ist. Aus der EP 2 473 294 B1 ist eine Recyclinganlage für Gipskarton bekannt mit Zerkleinerungsvorrichtungen, Abscheider sowie Sieben. Weiterhin sind aus der WO 2012/020607 A1, JP 2012 024690 A, EP 1 421 995 A1 und JP 2004 243165 A Recyclinganlagen für Gipskatonaschen bekannt.

Aufgabe der vorliegenden Erfindung ist es daher eine Möglichkeit zur Recycling von Gipskartonplatten, insbesondere aus Rückbau oder Abbruchgut bereitzustellen, die einfach und effizient aufgebaut ist sowie an verschiedene Zusammensetzungen des Abbruchguts anpassbar ist.

Die zuvor genannte Aufgabe wird mit einer Recyclinganalage für Gipskarton gemäß den Merkmalen im Patentanspruch 1 gelöst.

Vorteilhafte Ausgestaltungsvarianten der erfindungsgemäßen Anlage sind Gegenstand der abhängigen Patentansprüche.

Die erfindungsgemäße Recyclinganlage für Gipskarton weist folgende Komponenten auf:
- Aufnahmevorrichtung zur Aufnahme von zerkleinerten Gipskartonagen in einer Stückgröße von 0 bis 1000 mm, bevorzugt von 300 bis 500 mm,
- Erster Magnetabscheider zum Abscheiden großer metallischer Verunreinigungen,
- Erster Walzenzerkleinerer zum Zerkleinern der Gipskartongen auf eine Stückgröße von 10 bis 100 mm insbesondere von 60 bis 80 mm,
- Zweiter Magnetabscheider zum Abscheiden von metallischen Komponenten,
- Erstes Sieb zum Absieben von Gipskorn, kleiner 3 mm insbesondere kleiner 2 mm, bevorzugt kleiner 1,8 mm,
- Zweiter Walzenzerkleinerer zum Zerkleinern der Gipskartonstücke der ersten Siebanlage,
- Zweites Sieb zum Absieben von Papier und Störstoffen,
- Dritter Walzenzerkleinerer zum Zerkleinern der Gipsstücke,
- Drittes Sieb zum Absieben des Gipskorns, kleiner 3 mm insbesondere kleiner 2mm, bevorzugt kleiner 1,8 mm.

Zwischen den einzelnen Komponenten werden Förderer eingesetzt. Diese sind in der Regel als Förderbänder ausgebildet. Es können jedoch auch Rüttelförderer, Schnecken- oder Schraubenförderer oder sonstige bekannte Förderer genutzt werden um die jeweiligen Güter von einer Komponente der Recyclinganlage zur nächsten Komponente zu befördern und/oder von einer Komponente zu einer Sammeleinrichtung, beispielsweise einem Container zu befördern.

Die erfindungsgemäße Recyclinganlage besteht zunächst aus einer Aufnahmevorrichtung, insbesondere aus einem Bunker, in dem zuvor zerkleinerte Teile der zu recycelnden Gipskartonagen bzw. des Abbruchgutes eingebracht werden. Diese weisen eine Stückgröße zwischen 0 und 1000 mm, insbesondere zwischen 300 und 500 mm auf. Hierin enthalten sind bevorzugt entsprechende Stücke von Gipskartonagen jedoch auch sonstige Verunreinigungen oder sonstige Bau- Mischabfälle, beispielsweise Teile einer Konterlattung, Schrauben, Rückstände von aufgetragenen Putz oder sonstige Verunreinigungen oder aber Nebenprodukte.

Das Gut wird von der Aufnahmevorrichtung einer ersten Fördereinrichtung, insbesondere einem Förderband zugeführt, welches mit einem Magnetabscheider zum Abscheiden größer metallischer Verunreinigungen vorgesehen ist. Insbesondere werden hier lose Teile von Profilstücken sowie insbesondere Verschraubungen der Gipskartonagen durch den Magnetabscheider abgeschieden. Der Magnetabscheider kann dabei in beliebiger Ausgestaltungsvariante ausgebildet sein. Er zieht insbesondere unter Einsatz einer Magnetkraft die metallischen Werkstücke an, so dass diese dem Gut in einer ersten Stufe entzogen werden.

Das so von metallischen groben Verschmutzungen bereinigte Gut wird dann über eine Fördereinrichtung zu einem ersten Walzenzerkleinerer befördert. In dem ersten Walzenzerkleinerer erfolgt eine Zerkleinerung des Gutes auf eine Stückgröße von 10 bis 100 mm, insbesondere von 60 bis 80 mm. Der erste Walzenzerkleinerer ist dabei insbesondere als Walzenschraubenmühle ganz besonders bevorzugt mir drei Walzenpaaren ausgebildet.

Die beiden oberen Walzenpaare laufen dabei mit gleicher Rotationsgeschwindigkeit, welche insbesondere 20 bis 40 U/min, besonders bevorzugt 25 bis 35 U/min und ganz besonders bevorzugt 30 U/min beträgt. Das dritte, davon verschiedene Walzenpaar weist eine demgegenüber höhere Rotationsgeschwindigkeit auf, welche insbesondere 100 bis 150 U/min, besonders bevorzugt 120 bis 140 U/min und ganz besonders bevorzugt 130 U/min beträgt.

Die beiden oberen Walzenpaare sind dazu insbesondere als Schraubenwalzen ausgebildet und zerkleinern das Gut vor. Das untere Walzenpaar weist besonders bevorzugt 2 bis 10, insbesondere 5 oder 6 Schneidleisten auf. Diese Schneidleisten kämmen insbesondere mit einem Messer. Durch die oberen Schraubenwalzen wird somit das Material vorzerkleinert, wobei dann das dritte Walzenpaar das vorzerkleinerte Material auf die bevorzugte Stückgröße von 60 bis 80 mm zerkleinert. Insbesondere aufgrund des langsamen Laufens der Walzenpaare erfolgt eine schonende Zerkleinerung, so dass möglichst wenig Karton bzw. Papierfasern von dem Gips abgetrennt werden, so dass die Papierfasern nicht einzeln in das Gut eingebracht werden. Gleichzeitig ergibt sich aufgrund des langsamen Laufes eine geringe Leistungsaufnahme und somit einhergehend ein geringer Energieverbrauch, des ersten Walzenzerkleinerers. Besonders bevorzugt ist dabei insbesondere das unterste Walzenpaar mit einem Stellaktuator, insbesondere mit einem Hydraulikzylinder in dem Abstand beider Walzen einstellbar. Dabei kann über einen Sensor ein entsprechender Störstoff erkannt werden und durch Vergrößerung des Walzenabstandes kann dem Störstoff ausgewichen werden. Beispielsweise können massive Metallstücke oder aber auch Steine oder ähnliches, die ein deutlich höheres Widerstandsmoment gegenüber Zerkleinerung haben so erkannt werden und der abrasive Verschleiß an den Walzenpaaren hierdurch verringert werden. Die Langlebigkeit der erfindungsgemäßen Anlage, insbesondere des ersten Walzenzerkleinerers wird dadurch gesteigert.

Insbesondere durch einen Wechsel der Walzen des dritten Walzenpaares und/oder einer Vergrößerung des Abstandes des dritten Walzenpaares kann direkt die Stückgröße des den weiteren Komponenten zugeführten Gutes beeinflusst werden.

Nach dem ersten Walzenzerkleinerer folgt ein zweiter Magnetabscheider, der insbesondere die nunmehr metallisch gelösten Komponenten, welche sich noch in den weiter zu recycelndem Gut befinden aus abscheidet, bzw. heraussiebt oder herausfiltert. Insbesondere können durch die Stückgröße nach dem ersten Walzenzerkleinerer maßgeblich Verschraubungen, mit den Gipskartonagen an einer Lattung bzw. an einem Profil festgelegt waren, herausgeschieden werden.

Im Anschluss an den zweiten Magnetabscheider folgt ein erstes Sieb zum Absieben des Gipskornes. Das Gipskorn, welches abgesiebt wird, ist insbesondere kleiner 3 mm, bevorzugt kleiner 2 mm, ganz bevorzugt kleiner 1,8 mm. Aufgrund des ersten Walzenzerkleinerers werden Teile des Gipses derart zerkleinert, dass Körner herausbrechen bzw. herausbröseln. Diese kleinen Gipskörner können somit in dem ersten Sieb, welches insbesondere als Spannwellensieb ausgebildet ist herausgesiebt werden. Im Rahmen der Erfindung ist jedoch auch grundsätzlich jede andere Siebanlage zum Heraussieben von Körnern einsetzbar. Die herausgesiebten Gipskörner werden dann bevorzugt ausgehend vom ersten Sieb in eine Aufnahmevorrichtung zur Aufnahme des Gipskornes zugeführt, und in dieser gesammelt, so dass die Gipskörner einem weiteren Verwendungszweck insbesondere einem weiteren Recycling zugeführt werden können.

Das weitere Gut, aus dem die Gipskörner ausgesiebt wurden, wird dann über eine Fördervorrichtung, insbesondere ein Förderband einem zweiten Walzenzerkleinerer zum weiteren zerkleinern der Gipskartonstücke zugeführt. Insbesondere handelt es sich dabei bei dem zweiten Walzenzerkleinerer um einen Roller Crusher, der ein Walzenpaar, mithin zwei Walzen aufweist. Die zwei Walzen weisen besonders bevorzugt ein voneinander verschiedenes Profil auf, wobei insbesondere ein Profil als Chevron Profil ausgebildet ist und die andere Walze ein Ringprofil aufweist.

Weiterhin besonders bevorzugt weist jede Walze einen eigenen Antriebsmotor auf, wobei ebenfalls besonders bevorzugt die zwei Walzen in ihrem Walzenabstand zueinander über einen Stellaktuator einstellbar sind. Insbesondere hat jede Walze einen eigenen Antriebsmotor, so dass die beiden Walzen mit voneinander verschiedener Rotationsgeschwindigkeit laufen. Hierdurch erfolgt eine gute Trennung von Karton bzw. Papier und Gips. Das auf dem Gips befindliche Papier bzw. der Karton wird durch die voneinander verschiedenen Rotationsgeschwindigkeiten abgerieben, wobei aufgrund des Walzabstandes der Gips gleichzeitig gebrochen und somit weiter zerkleinert wird. Im Anschluss daran wird das nach dem zweiten Walzenzerkleinerer bearbeitete Gut zu einem zweiten Sieb befördert. In dem zweiten Sieb werden insbesondere das geriebene Papier bzw. die Kartonage sowie noch in dem Gut befindliche Störstoffe, wie beispielsweise Holzteilstücke, Steinstücke oder sonstige Verunreinigungen ausgesiebt.

Bevorzugt werden in dem zweiten Sieb Stücke ausgesiebt, die größer als 50 mm, ganz besonders bevorzugt größer als 20 mm sind. Das nach dem zweiten Sieb übrig gebliebene, dem weiteren Recycling zugeführte Gut weist somit besonders bevorzugt eine Stückgröße zwischen 0 und 20 mm auf.

Nach dem zweiten Sieb wird das ausgesiebte Gut einem dritten Walzenzerkleinerer zugeführt, welcher insbesondere wiederum als Roller Crusher ausgebildet ist. Dieser ist insbesondere mit einem Walzenpaar bestehend aus Glattwalzen bestückt, wobei der Abstand der Glattwalzen wiederum besonders bevorzugt einstellbar ist. Hierdurch werden zum einen das Gut, welches maßgeblich nunmehr aus Gipsstücken besteht kleiner gebrochen, wobei besonders bevorzugt aufgrund voneinander verschiedener Rotationsgeschwindigkeiten der Walzen des dritten Walzenzerkleinerers die Gipsstücke gleichzeitig auch zerrieben werden und so das Papier abgerieben wird.

An den dritten Walzenzerkleinerer schließt sich ein drittes Sieb an, welches wiederum Gipskörner kleiner 3 mm, insbesondere kleiner 2 mm bevorzugt kleiner 1,8 mm aus dem Gut heraussiebt. Die ausgesiebten Gipskörner werden besonders bevorzugt dann einer Sammelvorrichtung zugeführt, was insbesondere über einen Schneckenförderer erfolgt, auch kann ein sonstiger Förderer eingesetzt werden, beispielsweise ein Bandförderer.

Besonders bevorzugt handelt es sich bei der Sammelvorrichtung um eine zentrale Sammelvorrichtung, so dass von dem ersten Sieb sowie von dem dritten Sieb die ausgesiebten Gipskörner der zentralen Sammelvorrichtung zugeführt werden. Das nach dem dritten Sieb übrig gebliebene Material weist somit nur noch Störstoffe in zu vernachlässigender Weise Gipskörner größer 1,8 mm auf, welche als unzertrennbarer Rest der weiteren Verwertung zuführbar sind. Ebenfalls ist es möglich, das nach der dritten Siebanlage übrig gebliebene Gut erneut der gesamten Recyclinganlage zuzuführen.

Weiterhin besonders bevorzugt ist der Recyclinganlage eine Entstaubungsanlage zugeordnet, so dass in die Luft aufsteigende Gipspartikel oder sonstiger Staub während der unterschiedlichen Zerkleinerungsstationen abgefiltert werden. Im Rahmen der Erfindung können dann auch diese Staubpartikel dem weiteren Verwendungszweck zugeführt und/oder der Sammelvorrichtung für das Gipsfeinkorn zugeführt werden.

Weitere Vorteile, Merkmale, Eigenschaften und Aspekte der vorliegenden Erfindung sind Gegenstand der nachfolgenden Beschreibung. Eine bevorzugte Ausgestaltungsvariante ist in den nachfolgenden Figuren dargestellt. Diese dienen dem einfachen Verständnis der Erfindung. Es zeigen:
- Figur 1:: die erfindungsgemäße Recyclinganlage in einer perspektivischen Ansicht und
- Figur 2:: die Recyclinganlage in einer Draufsicht.

In den Figuren werden für gleiche oder ähnliche Bauteile dieselben Bezugszeichen verwendet, auch wenn eine widerholte Beschreibung entfällt.

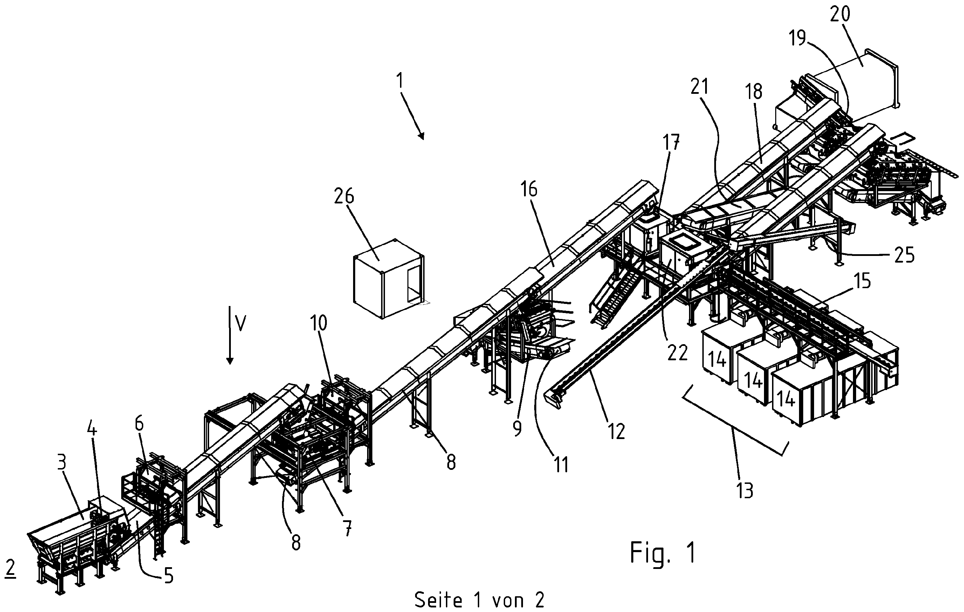

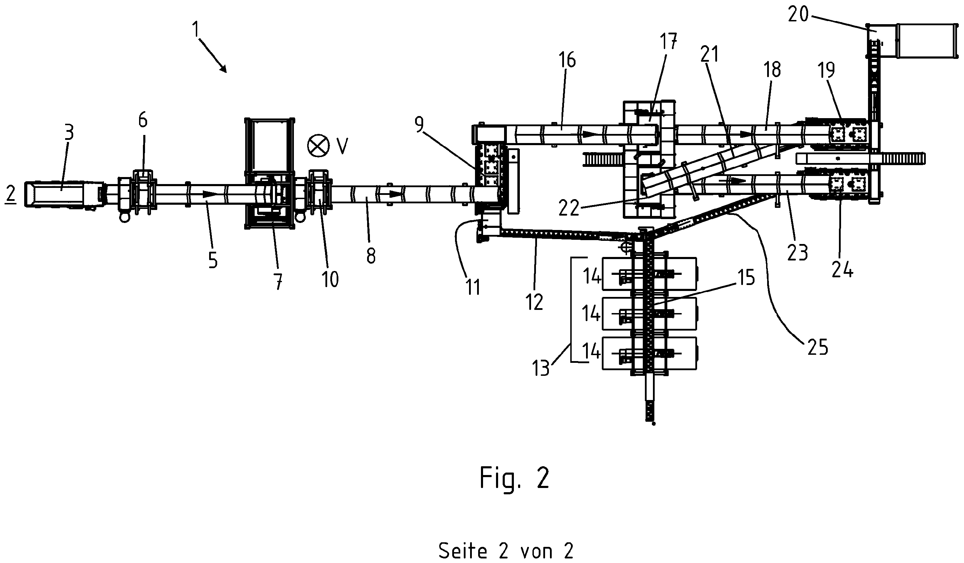

Figur 1 und 2 zeigen die erfindungsgemäße Recyclinganlage 1, an deren Beginn 2 eine Aufnahmevorrichtung 3 ausgebildet ist, insbesondere in Form eines hier dargestellten Schüttbehälters. In dieser Aufnahmevorrichtung 3 kann dann eine nicht näher dargestellte, bereits grob zerkleinerte Gipskartonage als Schüttgut eingeführt werden. Die Aufnahmevorrichtung 3 kann weiterhin, beispielsweise eine grobe Raspel 4 aufweisen, so dass die Gipskartonagen geringfügig zerkleinert werden.

Von der Aufnahmevorrichtung 3 wird dann das Gut auf ein erstes Förderband 5 aufgebracht, wobei über dem Förderband ein erster Magnetabscheider 6 angeordnet ist. Der erste Magnetabscheider 6 nimmt dabei aufgrund seiner Magnetkraft in dem Gut befindliche metallische, insbesondere eisenhaltige Werkstoffe auf, wobei die nicht magnetischen Teile des Gutes aufgrund der Erdanziehung auf dem ersten Förderband 5 verbleiben. Das auf dem ersten Förderband 5 verbleibende Gut wird dann einem ersten Walzenzerkleinerer 7 zugeführt, der als Walzenschraubmühle ausgebildet ist. Das der Walzenschraubmühle auf eine Vertikalrichtung V bezogen über das erste Förderband 5 zugeführte Gut fällt in den Walzenzerkleinerer 7 und durchläuft diesen aufgrund der Erdanziehungskraft sowie aufgrund der Rotationsbewegung der Walzen zueinander.

An einer Unterseite des Walzenzerkleinerers 7 fällt das durch diesen zerkleinerte Gut auf ein zweites Förderband 8, von dem es dann weiter in Transportrichtung zu einem ersten Sieb 9 transportiert wird. Während des Transportes auf dem zweiten Förderband 8 durchläuft das durch den ersten Walzenzerkleinerer 7 zerkleinerte Gut einen zweiten Magnetabscheider 10, der ebenfalls wiederum magnetisch leitende Werkstoffe aus dem zerkleinerten Gut abscheidet. Die nicht magnetischen Bestandteile des zerkleinerten Gutes verbleiben aufgrund der Erdanziehungskraft auf dem zweiten Förderband 8.

Das zweite Förderband 8 befördert dann das zerkleinerte Gut zu einem ersten Sieb 9, welches bevorzugt als Spannwellensieb ausgebildet ist. Das erste Sieb 9 siebt dabei nicht näher dargestellte Gipskörner aus und befördert diese mit einem, dem ersten Sieb 9 zugeordneten, Förderband 11 zu einem Schneckenförderer 12, wobei der Schneckenförderer 12 die bereits in diesem Stadium der Recyclinganlage ausgesiebten Gipskörner dann einer zentralen Sammelvorrichtung 13 zuführt. Die zentrale Sammelvorrichtung 13 ist hier durch drei Container 14 ausgebildet, die über eine zentrale Befüllanordnung 15 jeweils befüllt werden. So können beispielsweise die Container 14 jeweils befüllt werden und bei einem vollem ersten Container 14 können die zwei weiteren Container 14 befüllt werden, wohingegen der erste volle Container 14 gegen einen leeren Container 14 ausgetauscht wird. Die Unterbrechung der Recyclingproduktion ist somit nicht notwendig.

Das von dem ersten Sieb 9 nicht ausgesiebte Gut wird über ein drittes Förderband 16 einem zweiten Walzenzerkleinerer 17 in Form eines Roller Crusher zugeführt. Auch hier erfolgt wiederum ein Durchlaufen des zweiten Walzenzerkleinerers 17 aufgrund der Erdanziehungskraft sowie der Walzenbewegung des zweiten Walzenzerkleinerers 17 selbst. Das durch den zweiten Walzenzerkleinerer 17 zerkleinerte Gut wird dann über ein viertes Förderband 18 weiter transportiert zu einem zweiten Sieb 19, welches ebenfalls besonders bevorzugt wiederum als Spannwellensieb ausgebildet ist. In dem zweiten Sieb 19 wird das zu befördernde Gut, insbesondere mit einer Größe zwischen 0 und 20 mm ausgesiebt und der weiteren Recyclingverarbeitung zugeführt. Das dabei ausgesiebte Übergut besteht insbesondere aus Holz, Styropor, Papier oder sonstigen Störstoffen und wird insbesondere als Überkorn bezeichnet. Dieses wird in einem Sammelbehälter 20 aufgefangen und kann dann anderweitig verwertet werden.

Das weiter geförderte Gut, wird über ein fünftes Förderband 21 dann einem dritten Walzenzerkleinerer 22 zugeführt, welcher ebenfalls als Roller Crusher ausgebildet ist. Von dem dritten Walzenzerkleinerer 22 wird dann das zu befördernde Gut über ein sechstes Förderband 23 zu einem dritten Sieb 24, welches ebenfalls bevorzugt als Spannwellensieb ausgebildet ist befördert. Mit dem dritten Sieb 24 werden sodann wiederum Gipskörner ausgesiebt, die dann über einen zweiten Schneckenförderer 25 der zentralen Sammelvorrichtung 13 zugeführt werden. Die ausgesiebten Teile bestehend aus Papier, Holz oder Ähnlichem sowie Restbestandteilen des Gipses, welche größer sind als die vorgegebene Gipskorngröße können dann wiederum auch einer nicht näher dargestellten weiteren Verwendung oder Entsorgung zugeführt werden.

Mit der erfindungsgemäßen Anlage ist es insbesondere möglich, dass die zu trennenden Gipskartonagenstücke mit unterschiedlichen Verschmutzungen und/oder Größen besonders effektiv und ausfallsicher recycelt werden und von Überkorn sowie sonstigen Störstoffen getrennt werden. Insbesondere aufgrund der verschiedenen Walzenzerkleinerer sowie deren in unterschiedlicher Geschwindigkeit rotierenden Walzen ist es gerade möglich auch feuchte Gipskartonagen zu recyceln.

### Bezugszeichen:

1 - Recyclinganlage
2 - Beginn
3 - Aufnahmevorrichtung
4 - Raspel
5 - erstes Förderband
6 - erster Magnetabscheider
7 - erster Walzenzerkleinerer
8 - zweites Förderband
9 - erstes Sieb
10 - zweiter Magnetabscheider
11 - Förderband zu 9
12 - Schneckenförderer
13 - zentrale Sammelvorrichtung
14 - Container
15 - Befüllanordnung
16 - drittes Förderband
17 - zweiter Walzenzerkleinerer
18 - viertes Förderband
19 - zweites Sieb
20 - Sammelbehälter
21 - fünftes Förderband
22 - dritter Walzenzerkleinerer
23 - sechstes Förderband
24 - drittes Sieb
25 - zweiter Schneckenförderer
26 - zentrale Schaltstation

V - Vertikalrichtung

## Patentansprüche

1. Recyclinganlage (1) für Gipskarton, aufweisend folgende Komponenten:
- Aufnahmevorrichtung (3) zur Aufnahme von zerkleinerten Gipskartonagen in einer Stückgröße von 0 bis 1000 mm, bevorzugt von 300 bis 500 mm,
- Erster Magnetabscheider (6) zum Abscheiden großer metallischer Verunreinigungen,
- Erster Walzenzerkleinerer (7) zum Zerkleinern der Gipskartongen auf eine Stückgröße von 10 bis 100 mm insbesondere von 60 bis 80 mm,
- Zweiter Magnetabscheider (10) zum Abscheiden von metallischen Komponenten,
- Erstes Sieb (9) zum Absieben von Gipskorn, kleiner 3 mm insbesondere kleiner 2 mm, bevorzugt kleiner 1,8 mm,
- Zweiter Walzenzerkleinerer (17) zum Zerkleinern der Gipskartonstücke der ersten Siebanlage,
- Zweites Sieb (19) zum Absieben von Papier und Störstoffen,
- Dritter Walzenzerkleinerer (22) zum Zerkleinern der Gipsstücke,
- Drittes Sieb (24) zum Absieben des Gipskorns, kleiner 3 mm insbesondere kleiner 2mm, bevorzugt kleiner 1,8 mm.

2. Recyclinganlage nach Anspruch 1, **dadurch gekennzeichnet, dass** der erste Walzenzerkleinerer (7) als Walzenschraubenmühle mit drei Walzenpaaren ausgebildet ist.

3. Recyclinganlage nach Anspruch 2, **dadurch gekennzeichnet, dass** die beiden oberen Walzenpaare mit einer gleichen Rotationsgeschwindigkeit, insbesondere mit 20 bis 40 U/min laufen und dass das dritte Walzenpaar eine demgegenüber höhere Rotationsgeschwindigkeit aufweist.

4. Recyclinganlage nach dem vorhergehenden Anspruch, **dadurch gekennzeichnet, dass** die oberen Walzenpaare mit einer Rotationsgeschwindigkeit von 20 bis 40 U/Min, insbesondere von 25 bis 35 U/min laufen.

5. Recyclinganlage nach Anspruch 3 oder 4, **dadurch gekennzeichnet, dass** das dritte Walzenpaar mit einer Rotationsgeschwindigkeit von 100 bis 150 U/min läuft.

6. Recyclinganlage nach Anspruch 3 oder 4, **dadurch gekennzeichnet, dass** das dritte Walzenpaar mit einer Rotationsgeschwindigkeit von 120 bis 140 U/min läuft.

7. Recyclinganlage nach Anspruch 2 bis 6, **dadurch gekennzeichnet, dass** der Abstand der Walzen des untersten Walzenpaares der Walzenschraubenmühle über einen Stellaktuator variabel einstellbar ist.

8. Recyclinganlage nach dem vorhergehenden Anspruch, **dadurch gekennzeichnet, dass** der Stellaktuator über einen in Förderrichtung dem untersten Walzenpaar vorgelagerten Sensor automatisch ansteuerbar ist.

9. Recyclinganlage nach Anspruch 7 oder 8, **dadurch gekennzeichnet, dass** der Stellaktuator als hydraulischer Stellaktuator ausgebildet ist.

10. Recyclinganlage nach einem der vorhergehenden Ansprüche, **dadurch gekennzeichnet, dass** das erste Sieb (9), das zweite Sieb (19) und/oder das dritte Sieb (24) als Spannwellensieb ausgebildet sind.

11. Recyclinganlage nach einem der vorhergehenden Ansprüche, **dadurch gekennzeichnet, dass** der zweite Walzenzerkleinerer (17) als Roller Crusher ausgebildet ist, wobei beide Walzen mit voneinander verschiedener Geschwindigkeit laufen und/oder beide Walzen ein voneinander verschiedenes Profil aufweisen.

12. Recyclinganlage nach dem vorhergehenden Anspruch, **dadurch gekennzeichnet, dass** eine Walze ein Chevron Profil aufweist und die andere Walze ein Ringprofil und/oder dass jede Walze einen eigenen Antriebsmotor aufweist.

13. Recyclinganlage nach einem der vorhergehenden Ansprüche, **dadurch gekennzeichnet, dass** der dritte Walzenzerkleinerer (22) als Roller Crusher ausgebildet ist, wobei die zwei Walzen als Glattwalzen ausgebildet sind.

14. Recyclinganlage nach dem vorhergehenden Anspruch, **dadurch gekennzeichnet, dass** die zwei Glattwalzen mit voneinander verschiedener Rotationsgeschwindigkeit laufen.

15. Recyclinganlage nach einem der vorhergehenden Ansprüche, **dadurch gekennzeichnet, dass** die ausgesiebten Gipskörner des ersten Siebes (9) und des dritten Siebes (24) zu einer zentralen Sammelvorrichtung (13) gefördert werden, insbesondere über Schneckenförderer (12).

16. Recyclinganlage nach dem vorhergehenden Anspruch, **dadurch gekennzeichnet, dass** der Förderer ein Schneckenförderer (12) ist.

## Claims

1. Recycling system (1) for plasterboard, comprising the following components:
- receiving device (3) for receiving shredded plasterboard packaging in a unit size of 0 to 1000 mm, preferably of 300 to 500 mm.
- first magnet separator (6) for separating large metallic impurities,
- first shredder (7) for shredding the plasterboard packaging to a unit size of 10 to 100 mm, in particular 60 to 80 mm,
- second magnet separator (10) for separating metallic components,
- first screen (9) for screening gypsum grain, smaller than 3 mm, in particular smaller than 2 mm, preferably smaller than 1.8 mm,
- second shredder (17) for shredding the plasterboard pieces of the first screening unit,
- second screen (19) for screening paper and impurities,
- third shredder (22) for shredding the gypsum pieces,
- third screen (24) for screening the gypsum grain, smaller than 3 mm, in particular smaller than 2 mm, preferably smaller than 1.8 mm.

2. Recycling system according to claim 1, **characterised in that** the first shredder (7) is designed as a screw grinder mill with three pairs of rollers.

3. Recycling system according to claim 2, **characterised in that** the two upper pairs of rollers run at the same rotational speed, in particular at 20 to 40 rpm and **in that** the third pair of rollers has a higher rotational speed with respect thereto.

4. Recycling system according to the preceding claim, **characterised in that** the upper pairs of rollers run at a rotational speed of 20 to 40 rpm, in particular 25 to 35 rpm.

5. Recycling system according to claim 3 or 4, **characterised in that** the third pair of rollers runs at a rotational speed of 100 to 150 rpm.

6. Recycling system according to claim 3 or 4, **characterised in that** the third pair of rollers runs at a rotational speed of 120 to 140 rpm.

7. Recycling system according to claim 2 to 6, **characterised in that** the distance of the rollers of the lowermost pair of rollers of the screw grinder mill can be variably adjusted via an actuator.

8. Recycling system according to the preceding claim, **characterised in that** the actuator can be automatically actuated via a sensor upstream of the lowermost pair of rollers in the conveying direction.

9. Recycling system according to claim 7 or 8, **characterised in that** the actuator is designed as a hydraulic actuator.

10. Recycling system according to any one of the preceding claims, **characterised in that** the first screen (9), the second screen (19) and/or the third screen (24) are designed as a flip-flow screen.

11. Recycling system according to any one of the preceding claims, **characterised in that** the second shredder (17) is designed as a roller crusher, wherein both rollers run at speeds different from one another and/or both rollers have a profile different from one another.

12. Recycling system according to the preceding claim, **characterised in that** one roller has a chevron profile and the other roller has a ring profile and/or **in that** each roller has a separate drive motor.

13. Recycling system according to any one of the preceding claims, **characterised in that** the third shredder (22) is designed as a roller crusher, wherein the two rollers are designed as smooth rollers.

14. Recycling system according to the preceding claim, **characterised in that** the two smooth rollers run at rotational speeds different from one another.

15. Recycling system according to any one of the preceding claims, **characterised in that** the screened gypsum grains of the first screen (9) and the third screen (24) are conveyed to a central collection device (13), in particular via a screw conveyer (12).

16. Recycling system according to the preceding claim, **characterised in that** the conveyer is a screw conveyer (12).

## Revendications

1. Installation de recyclage (1) pour placoplâtre, présentant les composants suivants :
- un dispositif de réception (3) pour la réception de placoplâtre désintégré dans une grandeur de morceaux de 0 à 1000 mm, de préférence de 300 à 500 mm,
- un premier séparateur magnétique (6) pour la séparation de grandes impuretés métalliques,
- un premier désintégrateur à rouleaux (7) pour la désintégration du placoplâtre à une grandeur de morceaux de 10 à 100 mm en particulier de 60 à 80 mm,
- un second séparateur magnétique (10) pour la séparation de composants métalliques,
- un premier tamis (9) pour le tamisage de grain de gypse, inférieur à 3 mm en particulier inférieur à 2 mm, de préférence inférieur à 1,8 mm,
- un deuxième désintégrateur à rouleaux (17) pour la désintégration des morceaux de placoplâtre de la première installation de tamis,
- un deuxième tamis (19) pour le tamisage de papier et d'impuretés,
- un troisième désintégrateur à rouleaux (22) pour la désintégration des morceaux de gypse,
- un troisième tamis (24) pour le tamisage du grain de gypse, inférieur à 3 mm en particulier inférieur à 2 mm, de préférence inférieur à 1,8 mm.

2. Installation de recyclage selon la revendication 1, **caractérisée en ce que** le premier désintégrateur à rouleaux (7) est réalisé sous forme de broyeur à vis à rouleaux avec trois paires de rouleaux.

3. Installation de recyclage selon la revendication 2, **caractérisée en ce que** les deux paires de rouleaux supérieures tournent à une vitesse de rotation identique, en particulier à 20 à 40 tours/minute et que la troisième paire de rouleaux présente une vitesse de rotation supérieure à celle-ci.

4. Installation de recyclage selon la revendication précédente, **caractérisée en ce que** les paires de rouleaux supérieures tournent à une vitesse de rotation de 20 à 40 tours/minute, en particulier de 25 à 35 tours/minute.

5. Installation de recyclage selon la revendication 3 ou 4, **caractérisée en ce que** la troisième paire de rouleaux tourne à une vitesse de rotation de 100 à 150 tours/minute.

6. Installation de recyclage selon la revendication 3 ou 4, **caractérisée en ce que** la troisième paire de rouleaux tourne à une vitesse de rotation de 120 à 140 tours/minutes.

7. Installation de recyclage selon la revendication 2 à 6, **caractérisée en ce que** la distance entre les rouleaux de la paire de rouleaux la plus basse du broyeur à vis à rouleaux est réglable de manière variable par l'intermédiaire d'un actionneur de réglage.

8. Installation de recyclage selon la revendication précédente, **caractérisée en ce que** l'actionneur de réglage peut être commandé de manière automatique par l'intermédiaire d'un capteur logé dans le sens de transport avant la paire de rouleaux la plus basse.

9. Installation de recyclage selon la revendication 7 ou 8, **caractérisée en ce que** l'actionneur de réglage est réalisé sous forme d'actionneur de réglage hydraulique.

10. Installation de recyclage selon l'une quelconque des revendications précédentes, **caractérisée en ce que** le premier tamis (9), le deuxième tamis (19) et/ou le troisième tamis (24) sont réalisés sous forme de tamis à arbre tendeur.

11. Installation de recyclage selon l'une quelconque des revendications précédentes, **caractérisée en ce que** le second désintégrateur à rouleaux (17) est réalisé sous forme de broyeur à cylindre, dans laquelle les deux rouleaux tournent à une vitesse différente l'un de l'autre et/ou les deux rouleaux présentent un profil différent l'un de l'autre.

12. Installation de recyclage selon la revendication précédente, **caractérisée en ce qu'**un rouleau présente un profil en chevron et l'autre rouleau présente un profil annulaire et/ou que chaque rouleau présente un propre moteur d'entraînement.

13. Installation de recyclage selon l'une quelconque des revendications précédentes, **caractérisée en ce que** le troisième désintégrateur à rouleaux (22) est réalisé sous forme de broyeur à cylindre, dans laquelle les deux rouleaux sont réalisés sous forme de rouleaux lisses.

14. Installation de recyclage selon la revendication précédente, **caractérisée en ce que** les deux rouleaux lisses tournent à une vitesse de rotation différente l'un de l'autre.

15. Installation de recyclage selon l'une quelconque des revendications précédentes, **caractérisée en ce que** les grains de gypse tamisés du premier tamis (9) et du troisième tamis (24) sont transportés vers un dispositif de collecte central (13), en particulier par l'intermédiaire d'un transporteur à vis (12).

16. Installation de recyclage selon la revendication précédente, **caractérisée en ce que** le transporteur est un transporteur à vis (12).
